# EUROPEAN PATENT APPLICATION

(11) **EP 3 086 238 A1**
(43) Date of publication of application: **26.10.2016**
(21) Application number: 14801411.1
(22) Date of filing: 10.06.2014
(51) Int. Cl.: G06F 17/30

(54) **VISUAL SEARCH METHOD, SYSTEM AND MOBILE TERMINAL**

(30) Priority: 18.12.2013 CN 201310699781
(71) Applicant: ZTE Corporation, Shenzhen, Guangdong 518057 (CN)
(72) Inventor: LIU, Ming, Shenzhen Guangdong 518057 (CN)
(74) Representative: Regimbeau
(86) International application number: PCT/CN2014/079623
(87) International publication number: WO 2014/187408

(57) **Abstract**

The present disclosure discloses a visual search method, system and a mobile terminal. The visual search method includes: collecting, by a mobile terminal, an image, acquiring an image complexity coefficient of the image, sending the image to a serving end for the serving end to perform image search and receiving a search result fed back by the serving end when a value of the image complexity parameter is not within a preset range; and performing image search locally in a mobile terminal according to the image when the value of the image complexity parameter is within the preset range.

## Description

### Technical Field

The present disclosure relates to a field of search, and particularly to a visual search method, system and a mobile terminal.

### Background

Currently, a mainstream visual search architecture of a mobile terminal includes follow three architectures.

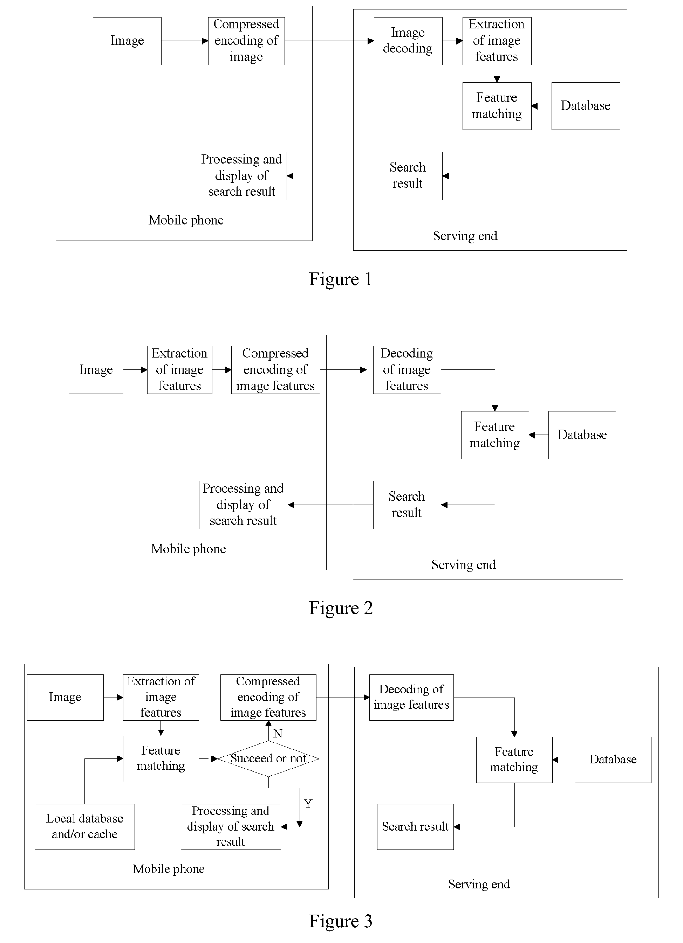

In a first architecture as shown in Figure 1, only image compression and result display are performed on the mobile terminal, and feature extraction, descriptor generation and image retrieval with high complexity are performed on a visualized search server end. Most of time of visualized search is consumed on data transmission since files uploaded to the server end in this architecture are large, and a big amount of time is spent on image coding and decoding, thereby greatly influencing user experience.

In a second architecture as shown in Figure 2, image feature extraction, descriptor generation and descriptor coding are performed on the mobile terminal side, descriptor information is uploaded to the server end, and descriptor decoding and image retrieval are performed on the server end.

A third architecture as shown in Figure 3 is similar to the second architecture, i.e., feature point extraction, descriptor generation and descriptor coding are performed on the mobile terminal side, descriptor information is uploaded to the server end, and descriptor decoding and image retrieval are performed on the server end. A difference from the second architecture is that, in the third architecture, there are local images or locally cached image data on the mobile terminal, and image retrieval can be performed locally on the mobile terminal.

Above latter two architectures have an advantage of using a calculating capability of the mobile terminal, but there is uncertainty about whether time consumed on image retrieval would be reduced by the latter two architectures, which mainly depends on complexity of an image collected by the system, adopted algorithms of feature point detection and descriptor generation, and transmission time of network data.

### Summary

In view of this, embodiments of the present disclosure provide a visual search method and system and a mobile terminal which can at least solve above problems in an existing technology.

To solve the above technical problems, embodiments of the present disclosure provide a visual search method, including following steps:
collecting, by a mobile terminal, an image, and acquiring an image complexity parameter of the image;
sending the image to a serving end for the serving end to perform image search when a value of the image complexity parameter is not within a preset range, and receiving a search result fed back by the serving end; and
performing image search locally in a mobile terminal according to the image when the value of the image complexity parameter is within the preset range.

Preferably, a step of acquiring an image complexity parameter of the image includes:
performing comparative feature extraction on the image and acquiring an image feature grouping mapping table;
incorporating comparative features according to the image feature grouping mapping table and counting number of pixel points corresponding to comparative features which can be incorporated into one class; and
calculating to obtain an image complexity coefficient according to a number counting result and the image feature grouping mapping table.

Preferably, a step of incorporating comparative features according to the image feature grouping mapping table includes:
converting the comparative features into binary comparative features; and
incorporating the comparative features according to binary comparative features and the image feature grouping mapping table;
a step of calculating to obtain an image complexity coefficient according to a number counting result and the image feature grouping mapping table includes:
   searching consistency distances of comparative feature values corresponding to the pixel points in the image feature grouping mapping table;
   calculating a percentage of pixel points of which consistency distances are within a preset range according to number counting result; and
   obtaining the image complexity coefficient according to the percentage;
   the image feature grouping mapping table is a characteristic grouping table generated in a mode of incorporating binary comparative features, from which a same processing result can be obtained after conversion processing, into one group; and the table at least includes: feature grouping indexes, consistency distances of comparative feature values corresponding to pixel points, and comparative feature values.

Preferably, the method further includes: acquiring image feature grouping indexes of the image; and
sending the image feature grouping indexes to the serving end when the value of the image complexity parameter is not within the preset range.

Preferably, a step of acquiring the image feature grouping indexes of the image includes:
extracting comparative features after the image is subjected to rough blocking; and
querying in the image feature grouping mapping table according to the extracted comparative features to obtain the image feature grouping indexes.

Preferably, the method further includes: sending an image feature file extracted in a local search process to the serving end for the serving end to perform image search when a local image search in the mobile terminal according to the image fails, and receiving a search result fed back by the serving end.

Similarly, to solve the above technical problems, the present disclosure further provides a mobile terminal, including: a collection module, a parameter acquisition module, a search module and a transceiver module; where
the collection module is configured to collect an image;
the parameter acquisition module is configured to extract an image complexity parameter of the image;
the transceiver module is configured to send, when a value of the image complexity parameter is not within a preset range, the image to a serving end for the serving end to perform image search, and receive a search result fed back by the serving end; and
the search module is configured to perform image search locally in a mobile terminal according to the image when the value of the image complexity parameter is within the preset range.

Preferably, the parameter acquisition module is configured for:
performing comparative feature extraction on the image and acquiring an image feature grouping mapping table;
incorporating comparative features according to the image feature grouping mapping table and counting number of pixel points corresponding to comparative features which can be incorporated into one class; and
calculating an image complexity coefficient according to a number counting result and the image feature grouping mapping table.

Preferably, the parameter acquisition module is configured for:
converting the comparative features into binary comparative features;
incorporating the comparative features according to the binary comparative features and the image feature grouping mapping table;
searching consistency distances of comparative feature values corresponding to the pixel points in the image feature grouping mapping table;
calculating a percentage of pixel points of which consistency distances are within a preset range according to the number counting result; and
obtaining the image complexity coefficient according to the percentage;
where the image feature grouping mapping table is a characteristic grouping table generated in a mode of incorporating binary comparative features, from which a same processing result can be obtained after conversion processing into one group; and the table at least includes: feature grouping indexes, consistency distances of comparative feature values corresponding to pixel points, and comparative feature values.

Preferably, the mobile terminal further includes: an index acquisition module; the index acquisition module is configured to acquire image feature grouping indexes of the image; and
the transceiver module is further configured for sending the image feature grouping indexes to the serving end when the value of the image complexity parameter is not within the preset range.

Preferably, the index acquisition module is configured for :
extracting comparative features after the image is subjected to rough blocking; and
querying in the image feature grouping mapping table according to the extracted comparative features to obtain the image feature grouping indexes.

Preferably, the transceiver module is further configured for sending an image feature file extracted in a local search process to the serving end for the serving end to perform image search when a local image search in the mobile terminal according to the image fails.

Similarly, to solve the above technical problems, the present disclosure further provides a visual search system, including: a serving end and a mobile terminal; where the mobile terminal includes: a collection module, a parameter acquisition module, a search module and a transceiver module; the serving end includes: a serving end search module and a serving end transceiver module; where
the collection module is configured to collect an image;
the parameter acquisition module is configured to extract an image complexity parameter of the image;
the transceiver module is configured to send, when a value of the image complexity parameter is not within a preset range, the image to a serving end for the serving end to perform image search, and receive a search result fed back by the serving end;
the search module is configured to perform image search locally in a mobile terminal according to the image when the value of the image complexity parameter is within the preset range;
the serving end transceiver module is configured to receive image information sent by the mobile terminal and feed back a search result of the serving end search module to the mobile terminal; and
the serving end search module is configured to perform image search according to the image information.

Preferably, the mobile terminal further includes: an index acquisition module;
the index acquisition module is configured to acquire image feature grouping indexes of the image;
the transceiver module is further configured for sending the image feature grouping indexes to the serving end when the value of the image complexity parameter is not within the preset range;
the serving end transceiver module is further configured for receiving the image feature grouping indexes sent by the mobile terminal; and
the serving end search module is configured for performing image search according to the image information and the grouping indexes.

Preferably, the transceiver module is further configured for sending an image feature file extracted in a local search process to the serving end when a local image search in the mobile terminal according to the image fails;
the serving end transceiver module is further configured for receiving the image feature file sent by the mobile terminal; and
the serving end search module is further configured for performing image search according to the image feature file.

Embodiments of the present disclosure have following beneficial effects. Embodiments of the present disclosure provide a visual search method and system and a mobile terminal which can reduce visual search time and increase visual search efficiency. The visual search method of the present disclosure includes: collecting, by a mobile terminal, an image, acquiring an image complexity coefficient of the image, sending the image to a serving end for the serving end to perform image search when a value of the image complexity parameter is not within a preset range, and receiving a search result fed back by the serving end; and performing image search locally in a mobile terminal according to the image when the value of the image complexity parameter is within the preset range. The visual search method of the present disclosure can intelligently select the mobile terminal or the serving end to perform image search according to the image complexity parameter, make full use of calculating capabilities of the mobile terminal and the serving end for collaborative work to complete visual search, and extract and search image features locally in a mobile terminal when processing an image with low image complexity, so as to reduce data transmission time between the mobile terminal and the serving end in a visual search process and increase visual search efficiency; and send the image to the serving end when processing an image with high image complexity so that the serving end with strong calculating capability performs image search, thereby shortening image search time and increasing visual search efficiency. Compared with the existing technology, the visual search method of the present disclosure can reduce transmission time of network data and increase visual search efficiency.

### Description of the Drawings

Figure 1 is a schematic diagram showing a first type of visual search architecture of a mobile terminal in an existing technology.
Figure 2 is a schematic diagram showing a second type of visual search architecture of a mobile terminal in an existing technology.
Figure 3 is a schematic diagram showing a third type of visual search architecture of a mobile terminal in an existing technology.
Figure 4 is a flow diagram showing a visual search method provided in embodiment 1 of the present disclosure.

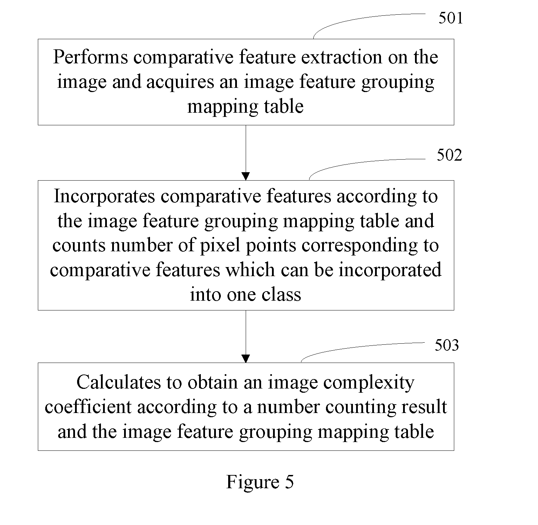

Figure 5 is a flow diagram showing a method for acquiring an image complexity parameter provided in embodiment 1 of the present disclosure.
Figure 6 is a work flow diagram showing a visual search system provided in embodiment 1 of the present disclosure.
Figure 7 is a flow diagram for acquiring image feature grouping indexes of the image provided in embodiment 1 of the present disclosure.
Figure 8 is a structural diagram showing a mobile terminal provided in embodiment 2 of the present disclosure.
Figure 9 is a structural diagram showing another mobile terminal provided in embodiment 2 of the present disclosure.
Figure 10 is a structural diagram showing a visual search system provided in embodiment 3 of the present disclosure.
Figure 11 is a structural diagram showing another visual search system provided in embodiment 3 of the present disclosure.

### Detailed Description

Disclosure points of embodiments of the present disclosure lie in: intelligently selecting a visual search solution according to complexity of collected images, and making full use of calculating capabilities of a mobile terminal and a serving end so as to make the mobile terminal and serving end complete visual search by collaborative work, thereby reducing visual search time and increasing visual search efficiency.

A main technical solution of embodiments of the present disclosure includes:
collecting, by the mobile terminal, an image, and acquiring an image complexity parameter of the image;
sending the image to a serving end for the serving end to perform image search, and receiving a search result fed back by the serving end, when a value of the image complexity parameter is not within a preset range; and
performing image search in the mobile terminal locally according to the image when the value of the image complexity parameter is within the preset range.

The solution of embodiments of the present disclosure can flexibly select the mobile terminal or the serving end to perform image search by means of the image complexity parameter, thereby increasing image search efficiency.

The present disclosure is further described in detail below through specific embodiments in combination with drawings.

### Embodiment 1

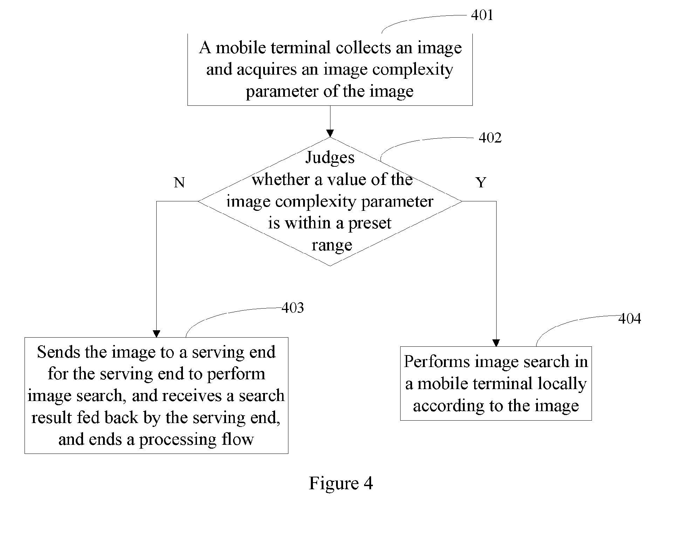

With reference to Figure 4, the present embodiment provides a visual search method, including step 401 to step 404.

In step 401, a mobile terminal collects an image and acquires an image complexity parameter of the image.

In step 402, judges whether a value of the image complexity parameter is within a preset range; executes step 403 if the value of the image complexity parameter is not within the preset range; and executes step 404 if the value of the image complexity parameter is within the preset range.

For the preset range of the present embodiment, a user can conduct setting according to an actual demand or an empirical value. The image complexity parameter in the present embodiment is a parameter capable of reflecting a complexity size of the image, and is an image complexity coefficient preferably. The larger the value of the image complexity coefficient, the more complex the image; and the smaller the image complexity coefficient, the more simple the image. The visual search method in the present embodiment would be introduced by taking an example of using the image complexity coefficient as the image complexity parameter.

The visual search method in the present embodiment adds a judgment process for judging whether the value of the image complexity parameter is within the preset range. It should be understood that the method of the present disclosure can also achieve to identify whether or not the value of complexity parameter is within the preset range through other steps.

In step 403, sends the image to a serving end for the serving end to perform image search, receives a search result fed back by the serving end, and ends a processing flow.

In the present embodiment, the serving end may adopt a mode known by those skilled in the art to perform image search. For example, features of a received image may be extracted and then feature matching and the like are performed in a database of the serving end.

In step 404, performs image search in a mobile terminal locally according to the image.

A mode known by those skilled in the art may be adopted to perform image search in the mobile terminal locally. For example, image features of the image are extracted and then feature matching is performed in a local database and/or cache according to the image features.

The visual search method of the present embodiment selects the mobile terminal or the serving end to perform image search according to the image complexity parameter. When image complexity is relatively small, the mobile terminal may perform image search locally without sending the image to the serving end for image search, thereby saving time of sending the image and receiving the search result. When the image complexity is relatively large, the image is sent to the serving end with powerful calculating capability to perform image search in consideration of calculating capability of the mobile terminal itself, thereby accelerating image search efficiency and reducing image search time.

In above step 401, a process of acquiring an image complexity parameter of the image specifically includes step 501 to step 503.

In step 501, performs comparative feature extraction on the image and acquires an image feature grouping mapping table.

In step 502, incorporates comparative features according to the image feature grouping mapping table and counts number of pixel points corresponding to comparative features which can be incorporated into one class.

Specifically, the comparative features may be converted into binary comparative features; and the comparative features may be incorporated according to binary comparative features and the image feature grouping mapping table. For example, extracted comparative features are represented in a binary system as 0000001, 00000010, 00000100 and 11111111, and then binary comparative features are converted into decimal comparative features, i.e., 1, 2, 4 and 255. Then, searching in the image feature grouping mapping table is performed according to the decimal comparative features. After the searching, it is known that features with feature values of 1, 2 and 4 can be incorporated into one class and features with a feature value of 255 can be individually incorporated into one class. Then, number of pixel points incorporated into one class can be counted with a histogram. For example, number of pixel points corresponding to the feature values of 1, 2 and 4 is counted and number of pixel points corresponding to the feature of 255 is counted.

In the present embodiment, the image feature grouping mapping table can be obtained in a mode of converting binary comparative features of the image and incorporating binary comparative features with consistent converting processing results into one group. The table at least includes: feature grouping indexes, consistency distances of comparative feature values corresponding to pixel points, and comparative feature values. For example, all binary comparative features of a sample image are extracted, then binary comparative features are converted, and binary comparative features with consistent converting processing results are incorporated into one class of feature groups. The image feature grouping mapping table includes the feature groups. Items included in each feature group may include but are not limited to: feature grouping indexes, consistency distances of comparative feature values corresponding to pixel points, and comparative feature values.

A construction method of the image feature grouping mapping table in the present embodiment is illustrated below by taking local binary patterns (LBP) features as an example.

first extracts 256 comparative features of the sample image and represents the features in a binary system as 00000000-1111111; then performs circular displacement calculation on the binary features, divides features with an identical circular displacement calculation result into one group, and simultaneously obtains consistency distances of pixel points according to the circular displacement calculation result. In the present embodiment, a consistency distance is number of continuous 1 or 0. For example, a binary comparative feature is 0000001, and 00000001 is obtained after circular displacement calculation, so the consistency distance is 7. Original 256 modes of features can be incorporated into 36 groups by the method, as shown in Table 1. Incorporation through the circular displacement method can solve a problem that a traditional comparative feature has no robustness on rotation.

In step 503, calculates to obtain an image complexity coefficient according to a number counting result and the image feature grouping mapping table;
specifically, searches consistency distances of comparative feature values corresponding to pixel points which can be incorporated into one class in the image feature grouping mapping table; calculates a percentage of pixel points of which consistency distances are within a preset range according to the number counting result; and obtains the image complexity coefficient according to the percentage. For example, calculates number of pixel points of which consistency distances of comparative feature values are between 1 to 3, and then divides the number by a total number of images to obtain the percentage. The method in the present embodiment classifies images according to pixel points, so that each comparative feature represents one pixel point. In the present embodiment, the image complexity coefficient can be obtained by calculating percentages of pixel points of which consistency distances are relatively small.

In the present embodiment, the consistency distance is number of continuous 0 or 1 in a binary system after circular displacement of a binary feature.

In the present embodiment, the percentage is a description of the image complexity coefficient. The larger the percentage, the more complex the image and the more the image features; and the smaller the percentage, the more simple the image and the fewer the image features.

A specific process of extracting the image complexity coefficient in the present embodiment is described below by taking local binary patterns (LBP) features as an example.

In a first step, calculates an integral image corresponding to the image;

In a second step, extracts comparative features and performs binary representation, i.e., comparative features are represented as binary comparative features including 0 and 1;

In a third step, incorporates the binary comparative features according to the image feature grouping mapping table, and counts the incorporated comparative features by a histogram. Specifically, converts the binary comparative features into decimal comparative features, and then incorporats according to the decimal comparative features and Table 1, e.g., incorporats 1, 2, 4, 8, 16 and 32 into one group; then counts features incorporated into one class by a histogram and counts number of pixel points incorporated into one class; and

In a fourth step, counts a percentage of pixel points of which consistency distances are relatively small, where the percentage is a description of the image complexity coefficient. For example, regarding LBP features, only a percentage of pixel points of which consistency distances are within a range of 0 to 3 is needed to be counted. The larger the percentage, the more complex the image, and the more features, so that feature extraction in an intelligent mobile terminal is unavailable. Conversely, the smaller the percentage, the more simple the image, the fewer features, and the lower the calculation complexity, so that feature extraction in the intelligent mobile terminal can be considered.

To reduce a search range of the serving end, the visual search method in the present embodiment further includes:
acquiring image feature grouping indexes of the image; and
sending the image feature grouping indexes to the serving end when the value of the image complexity parameter is not within the preset range.

In the visual search method of the present embodiment, the image and the image feature grouping indexes can be sent to the serving end when the value of the image complexity parameter is not within the preset range; and the serving end can perform image search according to the image and the image feature grouping indexes. Specifically, the serving end can extract image features of the integral image corresponding to collected images and then reduce an image search range according to the image feature grouping indexes, so as to enhance timeliness and accuracy of mobile visual search.

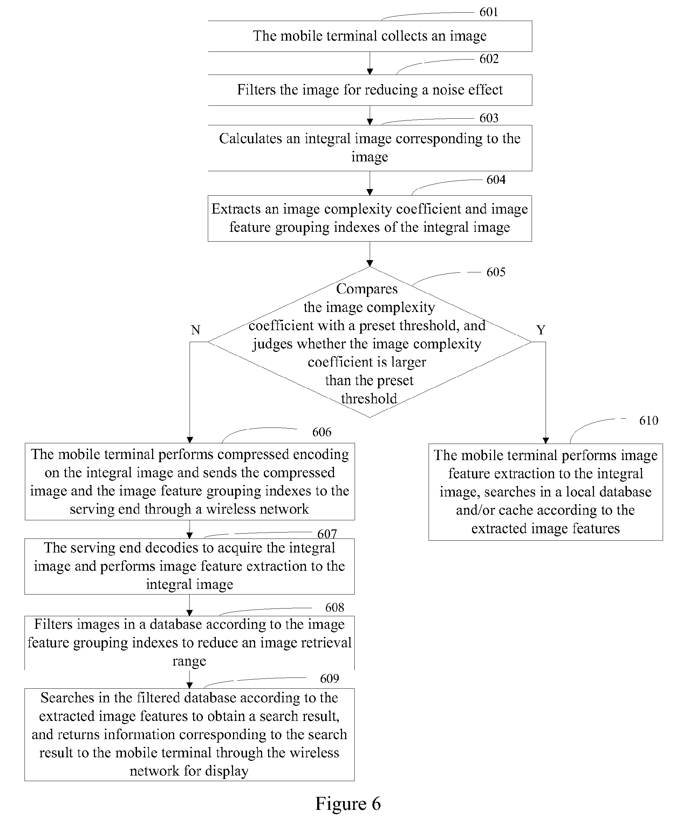

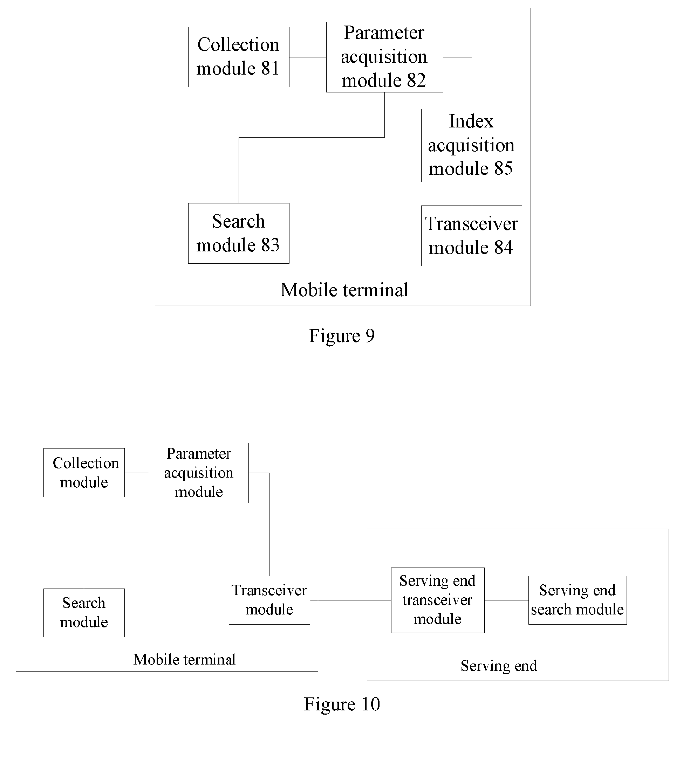

The visual search method in the present embodiment is further introduced below through a specific search system. The visual search system in the present embodiment, as shown in Figure 10, includes a mobile terminal and a serving end. The visual search method applied by the mobile terminal in the present embodiment, as shown in Figure 6, includes a systematic specific work flow as follows from step 601 to step 610.

In step 601, the mobile terminal collects an image.

In step 602, filters the image for reducing a noise effect.

In step 603, calculates an integral image corresponding to the image.

In step 604, extracts an image complexity coefficient and image feature grouping indexes of the integral image.

In step 605, compares the image complexity coefficient with a preset threshold; judges whether the image complexity coefficient is larger than the preset threshold; executes step 606 if the image complexity coefficient is larger than the preset threshold; and executes step 610 if the image complexity coefficient is not larger than the preset threshold.

In step 606, the mobile terminal performs compressed encoding on the integral image and sends the compressed image and the image feature grouping indexes to the serving end through a wireless network.

In step 607, the serving end decodies to acquire the integral image and performs image feature extraction to the integral image.

In step 608, filters images in a database according to the image feature grouping indexes to reduce an image retrieval range.

In step 609, searches in the filtered database according to the extracted image features to obtain a search result, and returns information corresponding to the search result to the mobile terminal through the wireless network for display.

In step 610, the mobile terminal performs image feature extraction to the integral image, searches in a local database and/or cache according to the extracted image features, and displays a search result if the search is successful.

A specific process of acquiring the image feature grouping indexes of the image in the present embodiment includes step 701 to step 702.

In step 701, extracts comparative features after the image is subjected to rough blocking.

For example, calculates the integral image corresponding to the image, partitions the integral image into a plurality of large sub-blocks, and then extracts comparative features of the integral image.

In step 702, queries in the image feature grouping mapping table according to comparative features of the image to obtain the image feature grouping indexes.

For example, queries the image feature grouping indexes in a grouping mapping table similar to Table 1.

In the visual search method provided in the present embodiment, image search is performed in a mobile terminal locally according to the image when the value of the image complexity parameter is within the preset range, and specific image search may include:
extracting, by the mobile terminal, the image features of the image, and performing feature matching in a local database and/or cache according to the extracted image features.

It is indicated that image search is successful if the matching fails, and the mobile terminal may display a search result; and
it is indicated that image search fails if the matching fails. At this moment, the mobile terminal may perform compressed encoding on the extracted image features, sends image features subjected to compressed encoding to the serving end. The serving end performs image search, and returns a search result to the mobile terminal.

Therefore, the flow shown in Figure 6 may further include: sending an extracted image feature file to the serving end in case of failure to local search. The serving end directly performs image search according to the image feature file, thereby increasing search efficiency of the serving end.

Compared with the related art, the visual search method in the present embodiment solves various negative effects brought by single transmission information of the mobile terminal and the serving end in a traditional technology, can effectively use calculating capabilities of the mobile terminal and the serving end for collaboratively completing a visual search task and reducing network transmission time, simultaneously extract and query the image feature grouping indexes through an algorithm with low time complexity, filter images to be retrieved according to the image feature grouping indexes in an query process, and can effectively improve timeliness of mobile visual search.

**Table 1**

| **Feature Grouping Indexes** | **Features** | **Consistency Distance** | **Original LBP Feature Values for Grouping** |
|---|---|---|---|
| 1 | 00000000 | 8 | 0 |
| 2 | 11111111 | 8 | 255 |
| 3 | 00000001 | 7 | 1,2, 4, 8, 16, 32, 64, 128 |
| 4 | 01111111 | 7 | 127, 191, 223, 239, 247, 251, 253, 254 |
| 5 | 00000011 | 6 | 3, 6, 12, 24, 48, 96, 129, 192 |
| 6 | 00111111 | 6 | 63, 126, 159, 207, 231, 243, 249, 252 |
| 7 | 00000101 | 5 | 5, 10, 20, 40, 65, 80, 130,160 |
| 8 | 00000111 | 5 | 7, 14, 28, 56, 112, 131, 193, 224 |
| 9 | 00011111 | 5 | 31, 62,124, 143, 199, 227, 241, 248 |
| 10 | 01011111 | 5 | 95, 125, 175, 190, 215, 235, 245, 250 |
| 11 | 00001001 | 4 | 9, 18, 33, 36, 66, 72, 132, 144 |
| 12 | 00001011 | 4 | 11, 22, 44, 88, 97, 133, 176, 194 |
| 13 | 00001101 | 4 | 13, 26, 52, 67, 104, 134, 161, 208 |
| 14 | 00001111 | 4 | 15, 30, 60, 120, 135, 195, 225, 240 |
| 15 | 00101111 | 4 | 47, 94, 121, 151, 188, 203, 229, 242 |
| 16 | 00111101 | 4 | 61, 79, 122, 158, 167, 211, 233, 244 |
| 17 | 01101111 | 4 | 111, 123, 183, 189, 219, 222, 237, 246 |
| 18 | 00010001 | 3 | 17, 34, 68, 136 |
| 19 | 00010011 | 3 | 19, 38, 49, 76, 98, 137, 152, 196 |
| 20 | 00010101 | 3 | 21, 42, 69, 81, 84, 138, 162, 168 |
| 21 | 00010111 | 3 | 23, 46, 92, 113, 139, 184, 197, 226 |
| 22 | 00011001 | 3 | 25, 35, 50, 70, 100, 140, 145, 200 |
| 23 | 00011011 | 3 | 27, 54, 99, 108, 141, 177, 198, 216 |
| 24 | 00011101 | 3 | 29, 58, 71, 116, 142, 163, 209, 232 |
| 25 | 00100111 | 3 | 39, 57, 78, 114, 147, 156, 201, 228 |
| 26 | 00110111 | 3 | 55, 110, 115, 155, 185, 205, 220, 230 |
| 27 | 00111011 | 3 | 59, 103, 118, 157, 179, 206, 217, 236 |
| 28 | 01010111 | 3 | 87, 93, 117, 171, 174, 186, 213, 234 |
| 29 | 01110111 | 3 | 119, 187, 221, 238 |
| 30 | 00100101 | 2 | 37, 41, 73, 74, 82, 146, 148, 164 |
| 31 | 00101011 | 2 | 43, 86, 89, 101, 149, 172, 178, 202 |
| 32 | 00101101 | 2 | 45, 75, 90, 105, 150, 165, 180, 210 |
| 33 | 00110011 | 2 | 51, 102, 153, 204 |
| 34 | 00110101 | 2 | 53, 77, 83, 106, 154, 166, 169, 212 |
| 35 | 01011011 | 2 | 91, 107, 109, 173, 181, 182, 214, 218 |
| 36 | 01010101 | 1 | 85, 170 |

### Embodiment 2

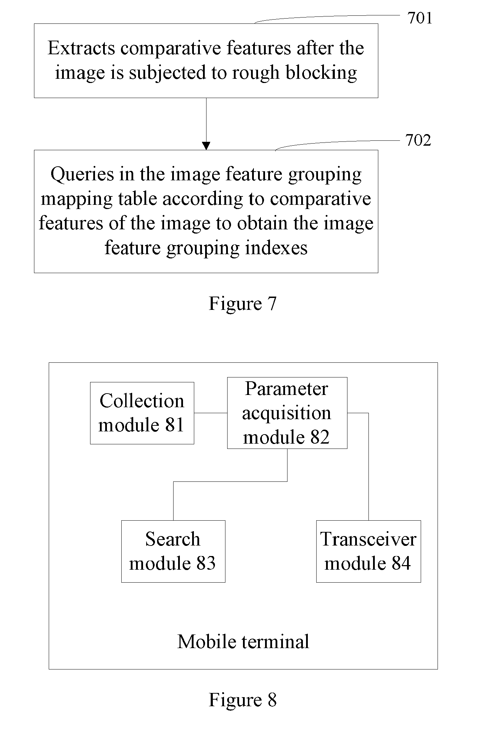

The present embodiment provides a mobile terminal, as shown in Figure 8, including: a collection module 81, a parameter acquisition module 82, a search module 83 and a transceiver module 84, where
the collection module 81 is configured to collect an image;
the parameter acquisition module 82 is configured to extract an image complexity parameter of the image;
the transceiver module 83 is configured to send, when a value of the image complexity parameter is not within a preset range, the image to a serving end for the serving end to perform image search, and receive a search result fed back by the serving end; and
the search module 84 is configured to perform image search locally in a mobile terminal according to the image when the value of the image complexity parameter is within the preset range.

The mobile terminal of the present embodiment can intelligently select the mobile terminal to perform visual search or the serving end to perform visual search according to image complexity. When image complexity is relatively small, the mobile terminal may perform image search locally without sending the image to the serving end for image search, thereby saving time of sending the image and receiving the search result. When the image complexity is relatively large, the image is sent to the serving end with powerful calculating capability to perform image search in consideration of calculating capability of the mobile terminal itself, thereby accelerating image search efficiency and reducing image search time.

Preferably, the parameter acquisition module in the present embodiment is configured for:
performing comparative feature extraction on the image and acquiring an image feature grouping mapping table;
incorporating comparative features according to the image feature grouping mapping table and counting number of pixel points which can be incorporated into one class; and
calculating an image complexity coefficient according to a number counting result and the image feature grouping mapping table.

Preferably, the parameter acquisition module in the present embodiment is configured for:
converting the comparative features into binary comparative features;
incorporating the comparative features according to the binary comparative features and the image feature grouping mapping table;
searching consistency distances of comparative feature values corresponding to the pixel points in the image feature grouping mapping table;
calculating a percentage of pixel points of which consistency distances are within a preset range according to the number counting result; and
obtaining the image complexity coefficient according to the percentage.

The image feature grouping mapping table is a characteristic grouping table generated in a mode of incorporating binary comparative features, from which a same processing result can be obtained after conversion processing, into one group. The table at least includes: feature grouping indexes, consistency distances of comparative feature values corresponding to pixel points, and comparative feature values.

Preferably, as shown in Figure 9, the mobile terminal in the present embodiment further includes: an index acquisition module 85 configured for acquiring image feature grouping indexes of the image; and the transceiver module is further configured for sending the image feature grouping indexes to the serving end when the value of the image complexity parameter is not within the preset range.

The mobile terminal shown in Figure 9 can send the image and the image feature grouping indexes to the serving end in case of a large image complexity coefficient, and the serving end can reduce an image search range according to the image feature grouping indexes, so as to enhance timeliness of mobile visual search.

Preferably, the index acquisition module in the present embodiment is configured for:
extracting comparative features after the image is subjected to rough blocking; and
querying in the image feature grouping mapping table according to the extracted comparative features to obtain the image feature grouping indexes.

Preferably, to further increase image search efficiency of the serving end, the transceiver module in the mobile terminal of the present embodiment is further configured for sending an image feature file extracted in a local search process to the serving end for the serving end to perform image search when a local image search in the mobile terminal according to the image fails.

The above collection module 81 can be realized through a camera. The parameter acquisition module 82, the search module 83 and the index acquisition module 85 can be realized through hardware such as CPU, DSP and the like. The transceiver module 84 can be realized through an antenna unit configured with DSP or CPU.

### Embodiment 3

The present embodiment provides a visual search system, as shown in Figure 10, including a mobile terminal and a serving end, where the mobile terminal includes: a collection module, a parameter acquisition module, a search module and a transceiver module; the serving end includes: a serving end search module and a serving end transceiver module; where
the collection module is configured to collect an image;
the parameter acquisition module is configured to extract an image complexity parameter of the image;
the transceiver module is configured to send, when a value of the image complexity parameter is not within a preset range, the image to a serving end for the serving end to perform image search, and receive a search result fed back by the serving end; and the search module is configured to perform image search locally in a mobile terminal according to the image when the value of the image complexity parameter is within the preset range;
the serving end transceiver module is configured to receive image information sent by the mobile terminal and feed back a search result of the serving end search module to the mobile terminal; and
the serving end search module is configured to perform image search according to the image information.

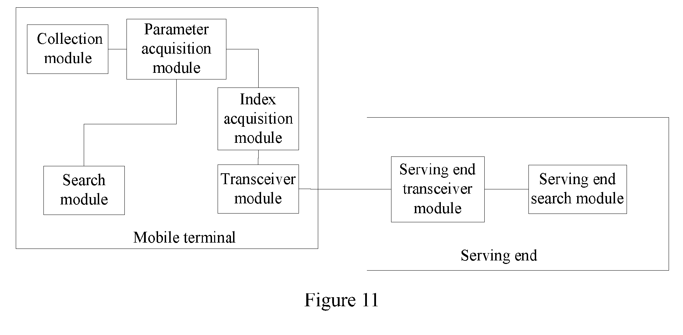

Preferably, as shown in Figure 11, the mobile terminal in the visual search system of the present embodiment may further include: an index acquisition module;
the index acquisition module is configured to acquire image feature grouping indexes of the image;
the transceiver module is further configured for sending the image feature grouping indexes to the serving end when the value of the image complexity parameter is not within the preset range;
the serving end transceiver module is further configured for receiving the image feature grouping indexes sent by the mobile terminal; and
the serving end search module is configured for performing image search according to the image information and the grouping indexes.

The serving end in the present embodiment can quickly locate relevant grouping images according to the grouping indexes after receiving the grouping indexes of the mobile terminal by adopting in a sample classification method. A specific sample classification method of the serving end includes: in an off-line training stage, extracting an image feature grouping index for each image, incorporating images with a same feature grouping index into one group; performing sample training with high complexity on each group; and in an on-line identifying stage, directly locating relevant grouping images according to the feature grouping indexes of the queried image and performing rapid image search by using a file of groups generated in the training stage.

Preferably, the transceiver module in the visual search system of the present embodiment is further configured for sending an image feature file extracted in a local search process to the serving end when a local image search in the mobile terminal according to the image fails;
the serving end transceiver module is further configured for receiving the image feature file sent by the mobile terminal; and
the serving end search module is further configured for performing image search according to the image feature file.

The mobile terminal and system in the present embodiment intelligently select a visual search solution of the mobile terminal through a lightweight image processing method, make full use of calculating capabilities of the mobile terminal and the serving end for collaboratively completing mobile visual search, reduce data transmission time and increase search efficiency.

The above contents are further detailed descriptions of the present disclosure in combination with specific embodiments. However, it cannot be considered that the specific embodiments of the present disclosure are only limited to these descriptions. For those ordinary skilled in the art to which the present disclosure belongs, several simple deductions or replacements may be made without departing from the conception of the present disclosure, all of which shall be considered to belong to the protection scope of the present disclosure.

## Claims

1. A visual search method, comprising:
collecting, by a mobile terminal, an image, and acquiring an image complexity parameter of the image;
sending the image to a serving end for the serving end to perform image search when a value of the image complexity parameter is not within a preset range, and receiving a search result fed back by the serving end; and
performing image search locally in the mobile terminal according to the image when the value of the image complexity parameter is within the preset range.

2. The visual search method of claim 1, wherein a step of acquiring an image complexity parameter of the image comprises:
performing comparative feature extraction on the image and acquiring an image feature grouping mapping table;
incorporating comparative features according to the image feature grouping mapping table and counting number of pixel points corresponding to comparative features which can be incorporated into one class; and
calculating to obtain an image complexity coefficient according to a number counting result and the image feature grouping mapping table.

3. The visual search method of claim 2, wherein a step of incorporating comparative features according to the image feature grouping mapping table comprises:
converting the comparative features into binary comparative features; and
incorporating the comparative features according to binary comparative features and the image feature grouping mapping table;
a step of calculating to obtain an image complexity coefficient according to a number counting result and the image feature grouping mapping table comprises:
searching consistency distances of comparative feature values corresponding to the pixel points in the image feature grouping mapping table;
calculating a percentage of pixel points of which consistency distances are within a preset range according to number counting result; and
obtaining the image complexity coefficient according to the percentage;
the image feature grouping mapping table is a characteristic grouping table generated in a mode of incorporating binary comparative features, from which a same processing result can be obtained after conversion processing, into one group; and the table at least comprises: feature grouping indexes, consistency distances of comparative feature values corresponding to pixel points, and comparative feature values.

4. The visual search method of any of claims 1-3, further comprising:
acquiring image feature grouping indexes of the image; and
sending the image feature grouping indexes to the serving end when the value of the image complexity parameter is not within the preset range.

5. The visual search method of claim 4, wherein a step of acquiring the image feature grouping indexes of the image comprises:
extracting comparative features after the image is subjected to rough blocking; and
querying in the image feature grouping mapping table according to the extracted comparative features to obtain the image feature grouping indexes.

6. The visual search method of any of claims 1-3, further comprising:
sending an image feature file extracted in a local search process to the serving end for the serving end to perform image search when a local image search in the mobile terminal according to the image fails, and receiving a search result fed back by the serving end.

7. A mobile terminal, comprising: a collection module, a parameter acquisition module, a search module and a transceiver module; wherein
the collection module is configured to collect an image;
the parameter acquisition module is configured to extract an image complexity parameter of the image;
the transceiver module is configured to send, when a value of the image complexity parameter is not within a preset range, the image to a serving end for the serving end to perform image search, and receive a search result fed back by the serving end; and
the search module is configured to perform image search locally in the mobile terminal according to the image when the value of the image complexity parameter is within the preset range.

8. The mobile terminal of claim 7, wherein the parameter acquisition module is configured for
performing comparative feature extraction on the image and acquiring an image feature grouping mapping table;
incorporating comparative features according to the image feature grouping mapping table and counting number of pixel points corresponding to comparative features which can be incorporated into one class; and
calculating to obtain an image complexity coefficient according to a number counting result and the image feature grouping mapping table.

9. The mobile terminal of claim 8, wherein the parameter acquisition module is configured for:
converting the comparative features into binary comparative features;
incorporating the comparative features according to the binary comparative features and the image feature grouping mapping table;
searching consistency distances of comparative feature values corresponding to the pixel points in the image feature grouping mapping table;
calculating a percentage of pixel points of which consistency distances are within a preset range according to the number counting result; and
obtaining the image complexity coefficient according to the percentage;
wherein the image feature grouping mapping table is a characteristic grouping table generated in a mode of incorporating binary comparative features, from which a same processing result can be obtained after conversion processing, into one group; and the table at least comprises: feature grouping indexes, consistency distances of comparative feature values corresponding to pixel points, and comparative feature values.

10. The mobile terminal of any of claims 7-9, further comprising: an index acquisition module which is configured to acquire image feature grouping indexes of the image;
accordingly, the transceiver module is configured for sending the image feature grouping indexes to the serving end when the value of the image complexity parameter is not within the preset range.

11. The mobile terminal of claim 10, wherein
the index acquisition module is configured for
extracting comparative features after the image is subjected to rough blocking; and
querying in the image feature grouping mapping table according to the extracted comparative features to obtain the image feature grouping indexes.

12. The mobile terminal of any of claims 7-9, wherein the transceiver module is configured for sending an image feature file extracted in a local search process to the serving end for the serving end to perform image search when a local image search in the mobile terminal according to the image fails.

13. A visual search system, comprising: a serving end and a mobile terminal; wherein
the mobile terminal comprises: a collection module, a parameter acquisition module, a search module and a transceiver module; the serving end comprises: a serving end search module and a serving end transceiver module; wherein
the collection module is configured to collect an image;
the parameter acquisition module is configured to extract an image complexity parameter of the image;
the transceiver module is configured to send, when a value of the image complexity parameter is not within a preset range, the image to a serving end for the serving end to perform image search, and receive a search result fed back by the serving end;
the search module is configured to perform image search locally in the mobile terminal according to the image when the value of the image complexity parameter is within the preset range;
the serving end transceiver module is configured to receive image information sent by the mobile terminal and feed back a search result of the serving end search module to the mobile terminal; and
the serving end search module is configured to perform image search according to the image information.

14. The visual search system of claim 13, wherein the mobile terminal further comprises: an index acquisition module which is configured to acquire image feature grouping indexes of the image;
accordingly, the transceiver module is configured for sending the image feature grouping indexes to the serving end when the value of the image complexity parameter is not within the preset range;
the serving end transceiver module is configured for receiving the image feature grouping indexes sent by the mobile terminal; and
the serving end search module is configured for performing image search according to the image information and the grouping indexes.

15. The visual search system of claim 13 or 14, wherein the transceiver module is configured for sending an image feature file extracted in a local search process to the serving end when a local image search in the mobile terminal according to the image fails;
the serving end transceiver module is configured for receiving the image feature file sent by the mobile terminal; and
the serving end search module is configured for performing image search according to the image feature file.
